(19) Europäisches Patentamt
European Patent Office
Office européen des brevets

(11) EP 3 035 048 A1

(12) EUROPEAN PATENT APPLICATION

(43) Date of publication:
22.06.2016 Bulletin 2016/25

(51) Int Cl.:
*G01N 29/06* (2006.01)     *E21B 47/00* (2012.01)
*G01N 29/44* (2006.01)     *G06T 7/00* (2006.01)

(21) Application number: 14290390.5

(22) Date of filing: 17.12.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Services Pétroliers Schlumberger
75007 Paris (FR)**
Designated Contracting States:
**FR**
• **Schlumberger Holdings Limited
Road Town, Tortola 1110 (VG)**
Designated Contracting States:
**GB NL**
• **Schlumberger Technology B.V.
2514 JG The Hague (NL)**
Designated Contracting States:
**AL AT BE BG CH CY CZ DE DK EE ES FI GR HR
HU IE IS IT LI LT LU LV MC MK MT NO PL PT RO
RS SE SI SK SM TR**

(72) Inventor: **Le Calvez, Jean-Luc
92140 Clamart (FR)**

(74) Representative: **Rzaniak, Martin
Etudes & Productions Schlumberger
1, rue Henri Becquerel, BP 202
92142 Clamart Cedex (FR)**

(54) **Systems and methods for evaluating gas-contaminated cement**

(57) Embodiments of the disclosure may include systems and methods for evaluating gas-contaminated cement. In one embodiment, a vector-valued image of cement state probability may be obtained from an acoustic logging tool, and a maximum a posterior classification of cement state of the vector-valued image may be determined. A vector probability diffusion equation may be used to minimize the total variation of the vector-valued image over a number of interactions to produce a second image. The maximum a posterior classification of cement state the second image may be determined and compared to the maximum a posterior classification of cement state of the vector-valued image. Depending on the comparison, the original image and cement state may be used or a new gas-contaminated image with a different cement state may be generated.

*FIG. 3*

**Description**

## BACKGROUND

This disclosure relates to measuring material properties, and, more particularly to, systems and methods for evaluating gas-contaminated cement.

A wellbore drilled into a geological formation may be targeted to produce oil and/or gas from certain zones of the geological formation. To prevent zones from interacting with one another via the wellbore and to prevent fluids from undesired zones entering the wellbore, a casing may be inserted into the wellbore and sections of the well may be cemented by injecting the annulus formed between the cylindrical casing and the geological formation with cement. The cement ensures the stability of the wellbore, prevents fluid migration between zones of the geological formation, and minimizes the rate of fluid-induced casing corrosion. Injection of the cement involves a number of factors, including the design and the pumping of the cement slurry, contamination of the cement-slurry by the drilling mud, a bad casing centralization, and so on.

A variety of acoustic tools may be used to evaluate the cement after installation. These acoustic tools may include ultrasonic tools operated in fluid-filled casing. For example, an ultrasonic tool may be lowered through the wellbore and rotated to provide vertical and azimuthal imaging of the cement. The cement may be evaluated using acoustic impedance measurements and, for some tools, flexural attenuation. A solid-liquid-gas (SLG) map may be used to interpret the acoustic cement evaluation data to indicate whether solids, liquids, or gases are in the annulus behind the casing of the wellbore. Although the SLG map can be used to map acoustic measurements to a probabilistic state of the material behind the casing (e.g., solid, liquid, or gas), certain conditions, such as light cement, can challenge the effectiveness of the SLG map.

## SUMMARY

Embodiments of this disclosure relate to various methods and systems for evaluating gas-contaminated cement. According to some embodiments, a method for evaluating gas-contaminated cement can be provided. The method can include obtaining, at a cement evaluation system, a first image of cement state probability of cement in a well, the cement state probability indicating a first cement state; and minimizing, by the cement evaluation system, a total variation of the first image of cement state probability using the vector probability diffusion equation: $\frac{\partial p}{\partial t} = div(\frac{\nabla p}{\|\nabla p\|})$ , where p is a pixel of the first image and t is an iteration, to produce a second image. The method can further include comparing the first image to the second image and generating, by the cement evaluation system, a gas-contaminated interpreted image based on the comparison between the first image and the second image.

According to another embodiment, a non-transitory tangible computer-readable storage medium having stored executable computer code can be provided. The code can include a set of instructions that causes one or more processors to perform the following operations: obtaining, at a cement evaluation system, a first image of cement state probability of cement in a well, the cement state probability indicating a first cement state and minimizing, by the cement evaluation system, a total variation of the first image of cement state probability using the vector probability diffusion equation:

$$\frac{\partial p}{\partial t} = div(\frac{\nabla p}{\|\nabla p\|})$$ , where p is a pixel of the first image and t is an iteration, to produce a second image. The code can further include a set of instructions that causes the one or more processors to perform the following operations: comparing the first image to the second image and generating, by the cement evaluation system, a gas-contaminated interpreted image based on the comparison between the first image and the second image.

According to another embodiment, a cement evaluation system for evaluating gas-contaminated cement can be provided. The system can include one or more processors and a non-transitory tangible computer-readable memory coupled to the one or more processors and having stored executable computer code stored. The code can include a set of instructions that causes the one or more processors to perform the following operations: obtaining, at a cement evaluation system, a first image of cement state probability of cement in a well, the cement state probability indicating a first cement state and minimizing, by the cement evaluation system, a total variation of the first image of cement state probability using the vector probability diffusion equation: $\frac{\partial p}{\partial t} = div(\frac{\nabla p}{\|\nabla p\|})$ , where p is a pixel of the first image and t is an iteration, to produce a second image. The code can further include a set of instructions that causes the one or more processors to perform the following operations: comparing the first image to the second image and generating, by the cement evaluation system, a gas-contaminated interpreted image based on the comparison between the first image and the second image.

Further, according to another embodiment, a method for evaluating gas-contaminated cement can be provided. The method can include obtaining, at a cement evaluation system, a vector-valued image of cement state probability of cement, determining, by a cement evaluation system, a first cement state classification of the cement using the vector-valued image, and minimizing, by a cement evaluation system, a total variation of the vector-valued image of cement-state probability to generate a second image. Additionally, the method, can include determining, by a cement evaluation system, a second cement state classification of the cement using the second image, comparing, by the cement evaluation system, the first cement state classification to the second cement state classification, and determining, by the cement evaluation system, whether the cement has a different cement state of gas contamination as compared to first cement state classification.

Various refinements of the features noted above may be undertaken in relation to various aspects of the present disclosure. Further features may also be incorporated in these various aspects as well. These refinements and additional features may be determined individually or in any combination. For instance, various features discussed below in relation to the illustrated embodiments may be incorporated into any of the above-described aspects of the present disclosure alone or in any combination. The brief summary presented above is intended to familiarize the reader with certain aspects and contexts of embodiments of the present disclosure without limitation to the claimed subject matter.

## BRIEF DESCRIPTION OF THE DRAWINGS

Various aspects of this disclosure may be better understood upon reading the following detailed description and upon reference to the drawings in which:

FIG. 1 is a schematic diagram of an example system for evaluating cement installation and zonal isolation of a well, in accordance with an embodiment of the disclosure;

FIG. 2 is a block diagram of an example acoustic downhole tool to obtain acoustic cement evaluation data in accordance with an embodiment of the disclosure;

FIG. 3 is a block diagram of an example acoustic downhole tool to obtain acoustic cement evaluation data in accordance with an embodiment of the disclosure;

FIG. 4 is a block diagram of an example process for interpretation of gas-contaminated cement in vector-valued images obtained from cement evaluation tools in accordance with an embodiment of the disclosure;

FIG. 5 depicts comparisons of example acoustic impedance maps obtained from an acoustic logging tool and determined using prior art techniques and the techniques described in the present disclosure;

FIG. 6 depicts comparisons of example acoustic impedance maps obtained from another acoustic logging tool and determined using various techniques described in the present disclosure; and

FIG. 7 is a block diagram of an example processing system in accordance with an embodiment of the present disclosure.

## DETAILED DESCRIPTION

Described herein are various embodiments related to the evaluation of gas-contaminated cement. Acoustic logging tools may be used downhole in a well to obtain acoustic measurements of an annular fill (e.g., cement) around a casing. The acoustic logging tools may produce images based on the acoustic measurements to enable determination of solid, liquid, and gas in the cement. A vector-valued image of cement state probability may be obtained over the domain scanned by the acoustic logging tool. A maximum a posterior classification of cement state of the vector-valued image may be determined. A vector probability diffusion equation may be used to minimize the total variation of the vector-valued image over any number of interactions to produce a second image. The maximum a posterior classification of cement state the second image may be determined.

The maximum a posterior classification of the first image is compared to the maximum a posterior classification of the second image. If the two classifications are different, a new gas-contaminated image with a different cement state may be generated. If the two classifications are the same, the original vector-valued image and cement state may be used.

These and other embodiments of the disclosure will be described in more detail through reference to the accompanying drawings in the detailed description of the disclosure that follows. This brief introduction, including section titles and corresponding summaries, is provided for the reader's convenience and is not intended to limit the scope of the claims or the proceeding sections. Furthermore, the techniques described above and below may be implemented in a number of ways and in a number of contexts. Several example implementations and contexts are provided with reference to the following figures, as described below in more detail. However, the following implementations and contexts are but a few of many.

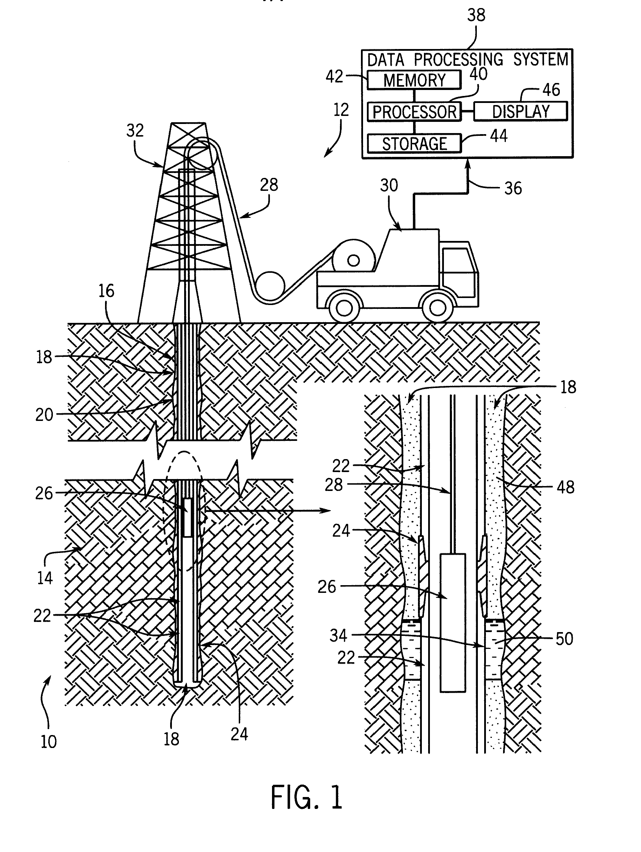

FIG. 1 schematically illustrates an example system 10 for evaluating cement behind casing in a well. In particular, FIG. 1 illustrates surface equipment 12 above a geological formation 14. In the example of FIG. 1, a drilling operation has previously been carried out to drill a wellbore 16. In addition, an annular fill 18 (e.g., cement) has been used to seal an annulus 20-the space between the wellbore 16 and casing joints 22 and collars 24-with cementing operations.

As seen in FIG. 1, several casing joints 22 (also referred to below as casing 22 are coupled together by the casing collars 24 to stabilize the wellbore 16. The casing joints 22 represent lengths of pipe, which may be formed from steel or similar materials. In one example, the casing joints 22 each may be approximately 13 m or 40 ft. long, and may include an externally threaded (male thread form) connection at each end. A corresponding internally threaded (female thread form) connection in the casing collars 24 may connect two nearby casing joints 22. Coupled in this way, the casing joints 22 may be assembled to form a casing string to a suitable length and specification for the wellbore 16. The casing joints 22 and/or collars 24 may be made of carbon steel, stainless steel, or other suitable materials to withstand a variety of forces, such as collapse, burst, and tensile failure, as well as chemically aggressive fluid.

The surface equipment 12 may carry out various well logging operations to detect conditions of the wellbore 16. The well logging operations may measure parameters of the geological formation 14 (e.g., resistivity or porosity) and/or the wellbore 16 (e.g., temperature, pressure, fluid type, or fluid flowrate). Other measurements may provide acoustic cement evaluation data (e.g., flexural attenuation and/or acoustic impedance) that may be used to verify the cement installation and the zonal isolation of the wellbore 16. One or more acoustic logging tools 26 may obtain some of these measurements.

The example of FIG. 1 shows the acoustic logging tool 26 being conveyed through the wellbore 16 by a cable 28. Such a cable 28 may be a mechanical cable, an electrical cable, or an electro-optical cable that includes a fiber line protected against the harsh environment of the wellbore 16. In other examples, however, the acoustic logging tool 26 may be conveyed using any other suitable conveyance, such as coiled tubing. The acoustic logging tool 26 may be, for example, an UltraSonic Imager (USI) tool and/or an Isolation Scanner (IS) tool by Schlumberger Technology Corporation. The acoustic logging tool 26 may obtain measurements of acoustic impedance from ultrasonic waves and/or flexural attenuation. For instance, the acoustic logging tool 26 may obtain a pulse echo measurement that exploits the thickness mode (e.g., in the manner of an ultrasonic imaging tool) or may perform a pitch-catch measurement that exploits the flexural mode (e.g., in the manner of an imaging-behind-casing (IBC) tool). These measurements may be used as acoustic cement evaluation data in a solid-liquid-gas (SLG) model map to identify likely locations where solid, liquid, or gas is located in the annulus 20 behind the casing 22.

The acoustic logging tool 26 may be deployed inside the wellbore 16 by the surface equipment 12, which may include a vehicle 30 and a deploying system such as a drilling rig 32. Data related to the geological formation 14 or the wellbore 16 gathered by the acoustic logging tool 26 may be transmitted to the surface, and/or stored in the acoustic logging tool 26 for later processing and analysis. As will be discussed further below, the vehicle 30 may be fitted with or may communicate with a computer and software to perform data collection and analysis.

FIG. 1 also schematically illustrates a magnified view of a portion of the cased wellbore 16. As mentioned above, the acoustic logging tool 26 may obtain acoustic cement evaluation data relating to the presence of solids, liquids, or gases behind the casing 22. For instance, the acoustic logging tool 26 may obtain measures of acoustic impedance and/or flexural attenuation, which may be used to determine where the material behind the casing 22 is a solid (e.g., properly set cement) or is not solid (e.g., is a liquid or a gas). When the acoustic logging tool 26 provides such measurements to the surface equipment 12 (e.g., through the cable 28), the surface equipment 12 may pass the measurements as acoustic cement evaluation data 36 to a data processing system 38 (e.g., a cement evaluation system) that includes a processor 40, memory 42, storage 44, and/or a display 46. In other examples, the acoustic cement evaluation data 36 may be processed by a similar data processing system 38 at any other suitable location. The data processing system 38 may collect the acoustic cement evaluation data 36 and determine whether such data 36 represents a solid, liquid, or gas using a solid-liquid-gas (SLG) model map, such as an acoustic impedance map. To do this, the processor 40 may execute instructions stored in the memory 42 and/or storage 44. As such, the memory 42 and/or the storage 44 of the data processing system 38 may be any suitable article of manufacture that can store the instructions. The memory 42 and/or the storage 44 may be ROM memory, random-access memory (RAM), flash memory, an optical storage medium, or a hard disk drive, to name a few examples. The display 46 may be any suitable electronic display that can display the logs and/or other information relating to classifying the material in the annulus 20 behind the casing 22.

In this way, the acoustic cement evaluation data 36 from the acoustic logging tool 26 may be used to determine whether cement of the annular fill 18 has been installed as expected. In some cases, the acoustic cement evaluation data 36 may indicate that the cement of the annular fill 18 has a generally solid character (e.g., as indicated at numeral 48) and therefore has properly set. In other cases, the acoustic cement evaluation data 36 may indicate the potential absence of cement or that the annular fill 18 has a generally liquid or gas character (e.g., as indicated at numeral 50), which may imply that the cement of the annular fill 18 has not properly set. By processing the acoustic cement evaluation data 36, ascertaining the character of the annular fill 18 may be more accurate and/or precise than merely using the data 36 in a conservative SLG model map.

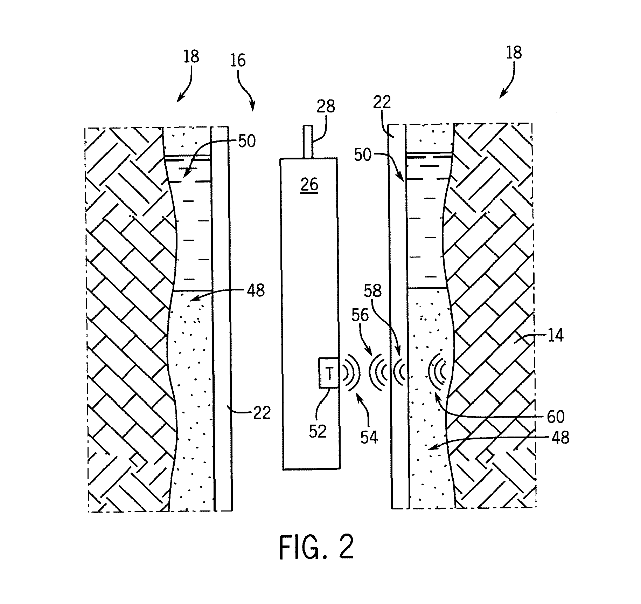

FIG. 2 provides an example of an embodiment of the acoustic logging tool 26 having a single emitter-transducer 54. Specifically, a transducer 54 in the acoustic logging tool 26 may emit acoustic waves 54 out toward the casing 22 making the casing vibrate in a direction normal to the casing wall. Some of the energy may be reflected (e.g., reflected waves 56, 58, and 60) and some energy be transmitted into the casing wall.

Reflected waves 56, 58, and 60 may correspond to interfaces at the casing 22, the annular fill 18, and the geological formation 14 or an outer casing, respectively. The reflected waves 56, 58, and 60 may vary depending on whether the annular fill 18 is of the generally solid character 48 or the generally liquid or gas character 50.

The proportions of reflected and transmitted energy may be induced by the acoustic impedances of the fluid in the casing and the casing and may be expressed according to Equations 1 and 2 below:

$$R = \frac{Z_2 - Z_1}{Z_2 + Z_1} \tag{1}$$

$$T = 1 + R = \frac{2Z_2}{Z_2 + Z_1} \tag{2}$$

Where $R$ is the reflected energy, $T$ is the transmitted energy, $Z_1$ is the acoustic impedance of the fluid and $Z_2$ is the acoustic impedance of the casing. The acoustic impedance (in MRayl) may be determined according to Equation 3 below:

$$Z = \rho V_p \tag{3}$$

Where $p$ is the bulk density (in g/cm3) and $V_p$ is the compressional velocity (in km/s). The reflection and transmission may happen at both the inner and outer surfaces of the casing wall and may result in back and forth propagation inside the casing wall. Thus, the acoustic pressure measured by the emitter-transducer 52 may be processed to measure the distance to, the thickness of, and the acoustic impedance behind the casing wall. The acoustic impedance may be interpreted with thresholds between gas, liquid, and solid cement.

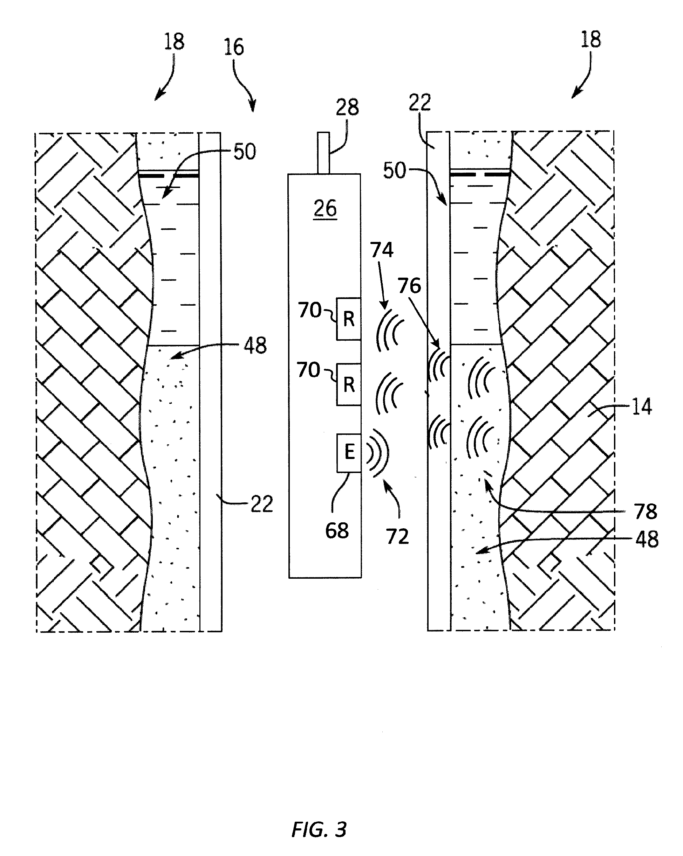

FIG. 3 provides an example of another embodiment of the acoustic logging tool 26 having a single emitter 68 and a pair of receiver transducers 70. The emitter 68 in the acoustic logging tool 26 may emit acoustic waves 72 out toward the casing 22 resulting in reflected waves 74, 76, and 78. In the embodiments shown in FIG. 3, the emitted energy excites a predominantly zeroth-order asymmetric mode (also referred to as flexural mode). As in the embodiment described above, the acoustic waves 72 propagate via transmission into both sides of the casing wall 22. The transmission is in accordance with Snell's law of refraction and the angle of transmission may be determined according to Equation 4 below:

$$\beta = as\,in\left(\frac{V}{V_{flex}}\right) \tag{4}$$

Where $\beta$ is the angle of transmission, $V_{flex}$ is the velocity of the casing wall and $V$ is the velocity outside the casing wall. The transmission in the casing annulus depends on the material on the outer side of the casing wall with a different amount of energy leak inside the annulus. The acoustic logging tool embodiment depicted in FIG. 3 may use measurements of acoustic impedance from flexural attenuation. The different distance from the emitter 68 and the two receiver transducers 70 and the energy leak induce different amplitudes on the measured acoustic pressure. The flexural attention (in dB/m) may be determined according to Equation 5 below:

$$\alpha = \frac{20\log_{10}\left(\dfrac{Amp_{near}}{Amp_{far}}\right)}{d(near, far)} \qquad (5)$$

Where $a$ is the flexural attenuation, $d$ (near, far) is the distance between the two receivers, and $Amp_{near}$ and $Amp_{far}$ are the amplitudes measured at the two receivers. The flexural attenuation may be used to determine information about the material surrounding the casing 22.

Both acoustic impedance and flexural attenuation may be combined to produce an interpretation of the annular material in the casing 22. Specifically, the distinction between solid and liquid may be interpreted near the critical point of highest attenuation. The interpretation may use *a priori* knowledge on the material inside and outside the casing wall to assign a probability of a Solid class, a Liquid class, or a Gas class. The *a priori* knowledge may be summarized by a probability density function for bulk density, longitudinal velocity, and the Poisson ratio described below in Equation 6:

$$v = \frac{1}{2}\frac{V_p^2 - 2V_s^2}{V_p^2 - V_s^2} \qquad (6)$$

The standard deviation threshold between solid, liquid, and gas of an acoustic impedance map produced by the tool described above may sometimes produce relatively noisy images with unclear interpretations. For example, such images may be produced for low density cement, a relatively small water-filled gap between the casing 22 and the cement, gas-contaminated cement, and other materials. Embodiments of the disclosure can include detection of gas-contaminated cement in the cement evaluation maps generated by the acoustic logging tools described above.

As described further below, embodiments may include a vector probability diffusion equation derived from a diffusion partial differential equation. Diffusion partial differential equations (PDE) may be used in image processing to restore digital images while preserving edges. The equations are based on an assumption that an unknown scalar image defined on domain $\Omega$ is corrupted with additive Gaussian noise, as described in Equation 7 below:

$$I = I_0 + \eta \qquad (7)$$

Where $I$ is the acquired image, $I_0$ is the original image, and $\eta$ is the Gaussian noise. It is desirable to recover the original image $I_0$ while preserving the features of interest (e.g., boundaries between homogenous regions) and while remaining similar to the acquired image. This objective may be defined by the minimization problem depicted below in Equation 8:

$$\min_I E(I), \; E(I)\int_\Omega \frac{\delta}{2}\left[(I - I_0)^2 + \phi\left(\|\nabla I\|\right)\right]d\Omega \qquad (8)$$

Where $\delta$ is a positive parameter which prevents the final solution from diverging from $I_0$, and $\phi$ is an increasing function that defines the algorithm. The solution to the minimization problem of Equation 8 may be a Euler-Lagrange equation as described below in Equation 9:

$$\delta(I_0 - I) + div\left(\frac{\phi'\left(\|\nabla I\|\right)}{\|\nabla I\|}\nabla I\right) = 0 \qquad (9)$$

If the function $\phi$ is chosen to be the $L_1$ norm ($\phi(x) = |x|$); the minimization problem is a total variation (TV) minimization problem and Equation 9 may then be expressed as Equation 10 below:

$$\delta(I_0 - I) + div\left(\frac{\nabla I}{\|\nabla I\|}\right) = 0 \qquad (10)$$

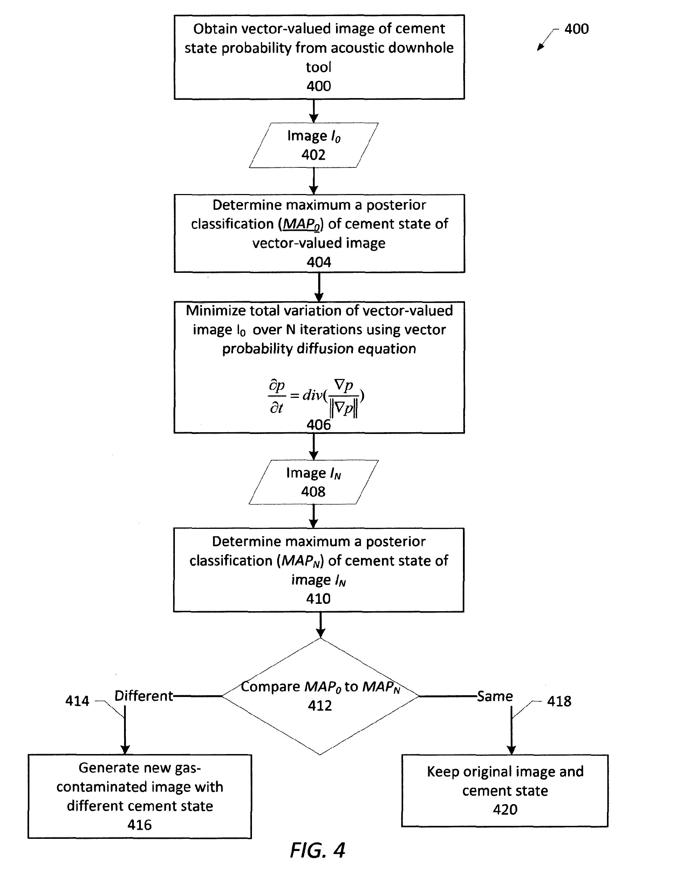

As described below, the diffusion PDE of Equation 4 may be extended to the vector-valued images of cement state probability obtained from the tools described above. FIG. 4 depicts an example process 400 for interpretation of gas-contaminated cement in vector-valued images obtained from cement evaluation tools. Initially, a vector-valued image $I_0$ 404 of cement state probability may be obtained from an ultrasonic downhole tool (block 402), such as the tools described above and illustrated in FIGs. 2 and 3. A maximum a posterior classification of the cement state of the vector-valued image $I_0$ $(MAP_0)$ may be determined (block 404).

Next, the total variation of the vector-valued image may be minimized over $N$ iterations using a vector probability diffusion equation derived from Equation 4 (block 406) to produce solution image 408 $(I_N)$. The vector probability diffusion equation is described below in Equation 11:

$$\frac{\partial p}{\partial t} = div\left(\frac{\nabla p}{\|\nabla p\|}\right) \qquad (11)$$

Where $t$ is the iteration and $p$ is a pixel $p(i,j)$ having coordinates $i$ and $j$ and each pixel $p(i,j)$ is a probability vector with components $(p_k (i,j))_{k=1,K}$. Next, a maximum a posterior classification of cement state of the solution image $I_N(MAP_N)$ may be determined (block 410). The maximum a posterior classification of the cement state of the vector-valued image $I_0(MAP_0)$ may be compared to the maximum a posterior classification of cement state of the solution image $I_N(MAP_N)$ (decision block 412). If the classifications are different (line 414), a new gas-contaminated image with a different cement state may be generated using the solution image $I_N$ (block 416). If the maximum a posterior classification $MAP_0$ and $MAP_N$ are the same (line 418), the original image $I_0$ and cement state may be used (block 420).

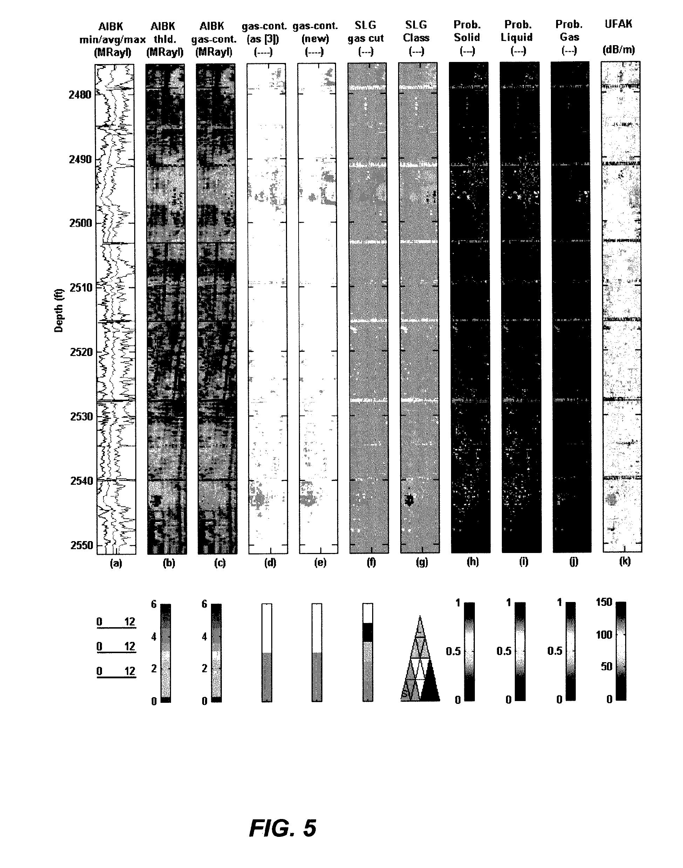

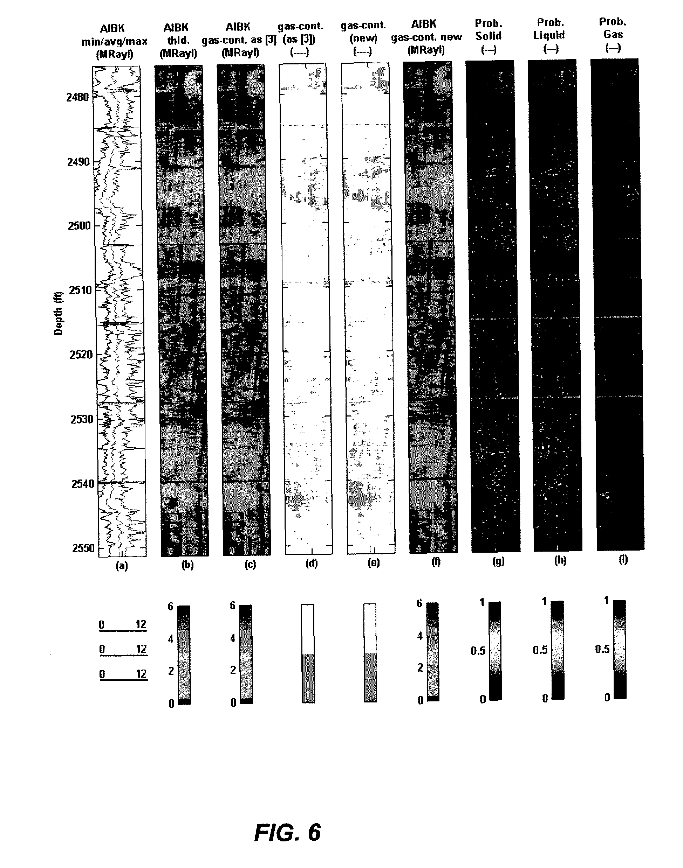

FIGs. 5 and 6 depict various acoustic impedance maps obtained using two different acoustic logging tools and comparisons of acoustic impedance maps determined using conventional techniques and/or the techniques described in the present disclosure. FIG. 5 depicts acoustic impedance and various example acoustic impedance maps, and depicts the following, in order from left to right (with a respective legend below each plot or map): a plot of minimum, average, and maximum acoustic impedance (in MRayl), an acoustic impedance map (in MRayl) with liquid-gas threshold at 0.3 MRayl, an acoustic impedance map (in MRayl) with gas contamination flag (in green), an acoustic impedance map with a gas contamination flag determined according to certain conventional techniques, an acoustic impedance map of with a gas contamination flag determined according to the techniques of the present disclosure, an interpreted solid-liquid-gas map with a gas contamination flag, an interpreted solid-liquid-gas map, a map of solid class probability from a cement evaluation tool, a map of liquid class probability from a cement evaluation tool, a map of gas class probability from a cement evaluation tool, and a flexural attenuation map (in dB/m).

FIG. 6 also depicts acoustic impedance and various example acoustic impedance maps obtained using conventional techniques and/or using the techniques described in the present disclosure. FIG. 6 depicts the following, in order (with a respective legend below each plot or map): a plot of minimum, average, and maximum acoustic impedance (in MRayl), an acoustic impedance map (in MRayl) with liquid-gas threshold at 0.3 MRayl, solid-liquid threshold at 2.6 MRayl, an acoustic impedance map (in MRayl) with gas contamination flag (in green), an acoustic impedance map with a gas contamination flag determined according to certain conventional techniques, an acoustic impedance map of with a gas contamination flag determined according to the techniques of the present disclosure, an acoustic impedance map of with the gas contamination flag determined according to the techniques of the present disclosure, a map of solid class probability from another cement evaluation tool, a map of liquid class probability from another cement evaluation tool, and a map of gas class probability from another cement evaluation tool.

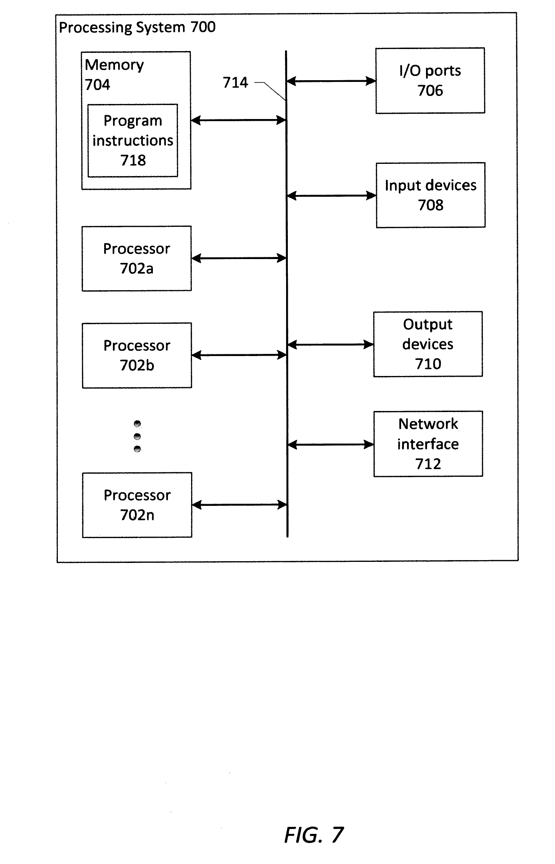

FIG. 7 is a block diagram of further details of an example processing system 700 (e.g., processing system 38) that may execute example machine-readable instructions used to implement one or more of the processes described herein and, in some embodiments, to implement a portion of one or more of the example downhole tools described herein. The processing system 700 may be or include, for example, controllers (e.g., processor 702A), special-purpose computing devices, servers, personal computers, personal digital assistant (PDA) devices, tablet computers, wearable computing devices, smartphones, internet appliances, and/or other types of computing devices. Moreover, while it is possible that the entirety of the system 700 shown in FIG. 7 is implemented within a downhole tool, it is also contemplated that one or more components or functions of the system 700 may be implemented in wellsite surface equipment. As shown in the embodiment illustrated in FIG. 7, the processing system 700 may include one or more processors (e.g., processors 702A-702N), a memory 704, I/O ports 706 input devices 708, output devices 710, and a network interface 712. The process system 700 may also include one or more interfaces 714 to facilitate communication between the various components of the system 700.

Any number of the processors, such as 702A, may provide the processing capability to execute programs, user interfaces, and other functions of the system 700. IN one example, processor 702A may include one or more processors and may include "general-purpose" microprocessors, special purpose microprocessors, such as application-specific integrated circuits (ASICs), or any combination thereof. In some embodiments, the processor 702A may include one or more reduced instruction set (RISC) processors, such as those implementing the Advanced RISC Machine (ARM) instruction set. Additionally, the processor 702A may include single-core processors and multicore processors and may include graphics processors, video processors, and related chip sets. Accordingly, the system 700 may be a uni-processor system having one processor (e.g., processor 702A), or a multi-processor system having two or more suitable processors (e.g., 702A-702N). Multiple processors may be employed to provide for parallel or sequential execution of the techniques described herein. Processes, such as logic flows, described herein may be performed by the processor 702A executing one or more computer programs to perform functions by operating on input data and generating corresponding output. The processor 702A may receive instructions and data from a memory (e.g., memory 704).

The memory 704 (which may include one or more tangible non-transitory computer readable storage mediums) may include volatile memory and non-volatile memory accessible by the processor 702A and other components of the system 700. For example, the memory 704 may include volatile memory, such as random access memory (RAM). The memory 704 may also include non-volatile memory, such as ROM, flash memory, a hard drive, other suitable optical, magnetic, or solid-state storage mediums or any combination thereof. The memory 704 may store a variety of information and may be used for a variety of purposes. For example, the memory 704 may store executable computer code, such as the firmware for the system 700, an operating system for the system 700, and any other programs or other executable code for providing functions of the system 700. Such executable computer code may include program instructions 718 executable by a processor (e.g., one or more of processors 702A-702N) to implement one or more embodiments of the present disclosure. Program instructions 718 may include computer program instructions for implementing one or more techniques described herein. Program instructions 718 may include a computer program (which in certain forms is known as a program, software, software application, script, or code).

The interface 714 may include multiple interfaces and may enable communication between various components of the system 700, the one or more processors 702A-702N, and the memory 704. In some embodiments, the interface 714, the processors 702A-702N, memory 704, and one or more other components of the system 700 may be implemented on a single chip, such as a system-on-a-chip (SOC). In other embodiments, these components, their functionalities, or both may be implemented on separate chips. The interface 714 may enable communication between processors 702A-702N, the memory 704, the network interface 710, or any other devices of the system 700 or a combination thereof. The interface 714 may implement any suitable types of interfaces, such as Peripheral Component Interconnect (PCI) interfaces, the Universal Serial Bus (USB) interfaces, Thunderbolt interfaces, Firewire (IEEE-1394) interfaces, and so on.

The system 700 may also include an input and output ports 706 to enable connection of additional devices. Embodiments of the present disclosure may include any number of input and output ports 706, including headphone and headset jacks, universal serial bus (USB) ports, Firewire (IEEE-1394) ports, Thunderbolt ports, and AC and DC power connectors. Further, the system 700 may use the input and output ports to connect to and send or receive data with any other device, such as other portable computers, personal computers, printers, etc.

The processing system 700 may include one or more input devices 708. The input device(s) 708 permit a user to enter data and commands used and executed by the processor, such as 702A. The input device 708 may include, for example, a keyboard, a mouse, a touchscreen, a gesture detection or receiving device, a track-pad, a trackball, an isopoint, and/or a voice recognition system, among others. The processing system 700 may also include one or more output devices 710. The output devices 710 may include, for example, display devices (e.g., a liquid crystal display or cathode ray tube display (CRT), among others), printers, and/or speakers, among others.

The system 700 depicted in FIG. 7 also includes a network interface 712. The network interface 712 may include a wired network interface card (NIC), a wireless (e.g., radio frequency) network interface card, or combination thereof. The network interface 712 may include known circuitry for receiving and sending signals to and from communications networks, such as an antenna system, an RF transceiver, an amplifier, a tuner, an oscillator, a digital signal processor, a modem, a subscriber identity module (SIM) card, memory, and so forth. The network interface 712 may communicate with networks (e.g., network 716), such as the Internet, an intranet, a cellular telephone network, a wide area network (WAN), a local area network (LAN), a metropolitan area network (MAN), or other devices by wired or wireless communication using any suitable communications standard, protocol, or technology.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way used for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense and not for purposes of limitation.

**Claims**

1. A method for evaluating gas-contaminated cement, comprising:

   obtaining, at a cement evaluation system, a first image of cement state probability of cement in a well, the cement state probability indicating a first cement state;
   minimizing, by the cement evaluation system, a total variation of the first image of cement state probability using the vector probability diffusion equation: $\dfrac{\partial p}{\partial t} = div(\dfrac{\nabla p}{\|\nabla p\|})$, wherein $p$ is a pixel of the first image and $t$ is an iteration, to produce a second image;
   comparing the first image to the second image; and
   generating, by the cement evaluation system, a gas-contaminated interpreted image based on the comparison between the first image and the second image.

2. The method of claim 1, wherein comparing the first image to the second image comprises:

   determining a first maximum a posteriori (MAP) classification of the cement state, the cement state selected from a plurality of predefined cement state classes;
   determining a second MAP classification of the cement state from the second image; and
   comparing the first MAP classification to the second MAP classification.

3. The method of claim 2, comprising determining, by the cement evaluation system, whether the cement has a different cement state of gas contamination as compared to the first cement state based at least in part on the comparison of the first MAP classification to the second MAP classification.

4. The method of claim 1, wherein each pixel p of the first image comprises a probability vector defined by $(p_k(i, j))_{k=1,K}$, wherein $K$ is a plurality of predefined cement state classes.

5. The method of claim 4, wherein the plurality of predefined cement state classes include a solid state, a liquid state, and a gas state.

6. The method of claim 1, wherein the image is a vector-valued image.

7. The method of claim 1, wherein obtaining the first image of cement state probability comprises obtaining the first image from an ultrasonic downhole tool having a single emitter and a pair of receiver transducers.

8. The method of claim 1, wherein obtaining the first image of cement state probability comprises obtaining the first image from an ultrasonic downhole tool having a single emitter-receiver transducer.

9. A cement evaluation system for evaluating gas-contaminated cement, comprising:

   one or more processors;
   a non-transitory tangible computer-readable memory coupled to the one or more processors and having executable computer code stored thereon, the code comprising a set of instructions that causes one or more processors to perform the following:
   obtaining, at the one or more processors, a first image of cement state probability of cement in a well, the cement state probability indicating a first cement state;

minimizing, by the one or more processors, a total variation of the first image of cement state probability using the vector probability diffusion equation: $\dfrac{\partial p}{\partial t} = div(\dfrac{\nabla p}{\|\nabla p\|})$, wherein $p$ is a pixel of the first image and $t$ is an iteration, to produce a second image;

comparing the first image to the second image; and

generating, by the one or more processors; a gas-contaminated interpreted image from the comparison between the first image and the second image.

10. The cement evaluation system of claim 9, comprising an ultrasonic downhole tool configured to provide the first image.

11. The cement evaluation system of claim 10, wherein the ultrasonic downhole tool comprises a single emitter and a pair of receiver transducers.

12. The cement evaluation system of claim 10, wherein the ultrasonic downhole tool comprises a single emitter-receiver transducer.

13. The cement evaluation system of claim 9, wherein comparing the first image to the second image comprises:

determining a maximum a posteriori (MAP) classification of the cement state, the cement state selected from a plurality of predefined cement state classes;

determining a second MAP classification of the cement state from the second image; and

comparing the first MAP classification to the second MAP classification.

14. The cement evaluation system of claim 13, wherein the code comprises a set of instructions that causes one or more processors to perform the following:

determining, by the cement evaluation system, whether the cement has a different cement state of gas contamination as compared to the first cement state based at least in part on the comparison of the first MAP classification to the second MAP classification.

FIG. 1

FIG. 2

*FIG. 3*

```
                                                                    ┌ 400
┌─────────────────────────────────┐                              ✓
│  Obtain vector-valued image of  │
│ cement state probability from   │
│     acoustic downhole tool      │
│             400                 │
└─────────────────────────────────┘
                 │
                 ▼
         ┌───────────────┐
        /   Image I₀     /
       /      402       /
      └───────────────┘
                 │
                 ▼
┌─────────────────────────────────┐
│  Determine maximum a posterior  │
│  classification (MAP₀) of       │
│    cement state of              │
│     vector-valued image         │
│             404                 │
└─────────────────────────────────┘
```

Image $I_0$
402

Determine maximum a posterior classification ($MAP_0$) of cement state of vector-valued image
404

Minimize total variation of vector-valued image $I_0$ over N iterations using vector probability diffusion equation

$$\frac{\partial p}{\partial t} = div\left(\frac{\nabla p}{\|\nabla p\|}\right)$$

406

Image $I_N$
408

Determine maximum a posterior classification ($MAP_N$) of cement state of image $I_N$
410

Compare $MAP_0$ to $MAP_N$
412

414 — Different

418 — Same

Generate new gas-contaminated image with different cement state
416

Keep original image and cement state
420

*FIG. 4*

14

**FIG. 5**

**FIG. 6**

## Processing System 700

Memory
704

714

Program
instructions
718

Processor
702a

Processor
702b

Processor
702n

I/O ports
706

Input devices
708

Output
devices
710

Network
interface
712

*FIG. 7*

Europäisches
Patentamt

European
Patent Office

Office européen
des brevets

# EUROPEAN SEARCH REPORT

Application Number

EP 14 29 0390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/213935 A1 (FAGNOU MARC [FR] ET AL) 13 September 2007 (2007-09-13) * paragraphs [0005], [0008], [0014] - [0017], [0052], [0061] * | 1-6,9, 10,13,14 | INV. G01N29/06 E21B47/00 G01N29/44 G06T7/00 |
| Y | EP 2 803 816 A1 (SERVICES PÉTROLIERS SCHLUMBERGER [FR]; SCHLUMBERGER TECHNOLOGY BV [NL]) 19 November 2014 (2014-11-19) * paragraphs [0001], [0043], [0102], [0104], [0108]; figures 1-3 * | 1-14 | |
| Y | ZORZO BARCELOS C A ET AL: "Image inpainting and denoising by nonlinear partial differential equations", COMPUTER GRAPHICS AND IMAGE PROCESSING, 2003. SIBGRAPI 2003. XVI BRAZI LIAN SYMPOSIUM ON OCT. 12-15, 2003, PISCATAWAY, NJ, USA,IEEE, 12 October 2003 (2003-10-12), pages 287-293, XP010664297, ISBN: 978-0-7695-2032-2 * pages 287,288 * | 1-14 | |
| A | ROBERT VAN KUIJK ET AL: "A Novel Ultrasonic Cased-Hole Imager for Enhanced Cement Evaluation", PROCEEDINGS OF INTERNATIONAL PETROLEUM TECHNOLOGY CONFERENCE, 1 January 2005 (2005-01-01), XP55064256, DOI: 10.2523/10546-MS ISBN: 978-1-55-563991-4 * paragraph [Introduction] * * paragraph [Data.Processing] * | 1,9 | TECHNICAL FIELDS SEARCHED (IPC) G01N E21B G06T |

-/--

The present search report has been drawn up for all claims

| Place of search | Date of completion of the search | Examiner |
|---|---|---|
| Munich | 19 May 2015 | Filipas, Alin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 14 29 0390

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MORRIS C ET AL: "Enhanced Ultrasonic Measurements for Cement and Casing Evaluation", AADE NATIONAL TECHNICAL CONFERENCE AND EXHIBITION,, 10 April 2007 (2007-04-10), pages 1-13, XP007922302, | 7,11 | |
| A | * paragraph [Introduction] * <br> * paragraph [Conclusions]; figure 1 * <br> ----- | 1,9 | |

TECHNICAL FIELDS
SEARCHED        (IPC)

The present search report has been drawn up for all claims

| Place of search | Date of completion of the search | Examiner |
|---|---|---|
| Munich | 19 May 2015 | Filipas, Alin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 29 0390

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2015

| Patent document cited in search report | | Publication date | Patent family member(s) | | Publication date |
|---|---|---|---|---|---|
| US 2007213935 | A1 | 13-09-2007 | CA<br>CN<br>GB<br>US | 2610008 A1<br>101236664 A<br>2444375 A<br>2007213935 A1 | 29-05-2008<br>06-08-2008<br>04-06-2008<br>13-09-2007 |
| EP 2803816 | A1 | 19-11-2014 | EP<br>WO | 2803816 A1<br>2014186640 A2 | 19-11-2014<br>20-11-2014 |

EPO FORM P0459

For more details about this annex : see Official Journal of the European Patent Office, No. 12/82